(19) Europäisches Patentamt
European Patent Office
Office européen des brevets

(11) **EP 2 076 576 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: **07803230.7**

(22) Anmeldetag: **05.09.2007**

(51) Int Cl.:
*C09J 7/02* *(2006.01)*        *B29C 47/06* *(2006.01)*

(86) Internationale Anmeldenummer:
**PCT/EP2007/059266**

(87) Internationale Veröffentlichungsnummer:
**WO 2008/031751 (20.03.2008 Gazette 2008/12)**

(54) **VERFAHREN ZUR HERSTELLUNG EINES DOPPELSEITIGEN HAFTKLEBEBANDES**

PROCESS FOR PRODUCING A DOUBLE-SIDED PRESSURE-SENSITIVE ADHESIVE TAPE

PROCÉDÉ DE FABRICATION D'UNE BANDE AUTOCOLLANTE DOUBLE FACE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.09.2006 DE 102006043259**

(43) Veröffentlichungstag der Anmeldung:
**08.07.2009 Patentblatt 2009/28**

(73) Patentinhaber: **TESA SE**
**20253 Hamburg (DE)**

(72) Erfinder:
• **HUSEMANN, Marc**
**22559 Hamburg (DE)**
• **DIETZ, Bernd**
**22949 Ammersbek (DE)**

(74) Vertreter: **Stubbe, Andreas et al**
**tesa AG**
**Quickbornstrasse 24**
**20253 Hamburg (DE)**

(56) Entgegenhaltungen:
**EP-A- 1 440 792    EP-A- 1 506 984**
**EP-A- 1 520 896**

## Beschreibung

Die Erfindung betrifft die Herstellung eines doppelseitigen Haftklebebandes mit einer geschlossenen und offenen Seite, welches eine Trägerfolie aufweist, die beidseitig mit einer Haftklebeschicht ausgerüstet ist, wobei die Trägerfolie eine filmische Trägerfolie ist, die nicht auf Kautschukbasis beruht. Auf der geschlossenen Seite befindet sich auf einer der Haftklebeschichten mindestens eine Releasefolie. Erfindungsgemäß erfolgt die Herstellung vorzugsweise mittels Coextrusionsverfahren. Gegenstand der Erfindung ist auch das doppelseitige Haftklebeband an sich sowie seine Verwendung insbesondere im Elektronikbereich.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Einsatzfähigkeit in einem relativ weiten Temperaturbereich. Diese Pölyacrylathaftklebemassen werden in der Regel in Lösung durch eine freie radikalische Polymerisation hergestellt. Die Polyacrylate werden in Lösung oder aus der Schmelze über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung (ES: Elektronenstrahlung). Der beschriebene Prozess ist relativ kostenaufwendig, so dass die doppelseitigen Haftklebebänder auf Basis von Acrylathaftklebemassen relativ teurer sind.

Es existieren daher viele Anstrengungen, ein doppelseitiges Klebeband günstiger herzustellen. Zur Steigerung der Effizienz wird mehr und mehr die Hotmelt-Technologie eingeführt, zum Beispiel durch die Verarbeitung der UVac Resins der BASF AG. Durch den Wegfall des Lösungsmittels wird das Problem der Bildung von Blasen bei der Trocknung der Lösungsmittelhaltigen Polyacrylathaftklebemassen umgangen. Dennoch müssen immer noch zwei Beschichtungsschritte eingesetzt werden, was wiederum den Prozess verlangsamt und verteuert. Weiterhin muss zur Herstellung eines doppelseitigen Haftklebebandes auch noch das Trägermaterial hinzukaschiert werden, so dass dieser Schritt ebenfalls Geschwindigkeitsbestimmend für den gesamten Prozess werden kann.

Aus der EP 1 506 984 A1 ist ein Verfahren bekannt, bei dem fünf Schichten eines Klebebands coextrudiert werden. Bei den Schichten handelt es um einen Träger, auf den ober- und unterseitig jeweils eine Primerschicht aufgebracht werden, auf die wiederum jeweils eine Klebemasse extrudiert wird.

Darüber, mit welcher Art Düse diese Coextrusion durchgeführt wird, schweigt sich die EP 1 506 984 A1 aus.

Ziel ist daher die Herstellung eines doppelseitigen Haftklebebandes in einem Prozessschritt. Der Prozess sollte bevorzugt die Klebemassen (Vorder- und Rückseite), das Trägermaterial und Trennliner (Releasefolie) umfassen. Der Erfindung lag dabei die Aufgabe zugrunde ein Haftklebeband herzustellen, das insbesondere im Elektronikbereich eingesetzt werden kann und kostengünstig und einfach herstellbar sowie gut stanzbar sein sollte.

Die Erfindung wird gemäß den Ansprüchen realisiert, wobei filmische Trägermaterialien, die nicht auf Kautschukbasis beruhen, als Trägerfolien verwendet werden. Gegenstand der Erfindung ist ein Verfahren zur Herstellung eines doppelseitigen Haftklebebandes mit einer geschlossenen und offenen Seite, welches eine filmische Trägerfolie e aufweist, die nicht auf Kautschukbasis beruht und die beidseitig mit einer Haftklebeschicht c, c' ausgerüstet ist. Auf der als geschlossen zu bezeichnenden Seite (auf der einen Haftklebeschicht c) befindet sich mindestens eine Releasefolie.

Das erfindungsgemäße Verfahren ist dadurch gekennzeichnet, dass aus der Schmelze

- zwei identische oder unterschiedliche Haftklebemassen zu den Haftklebeschichten c, c',
- ein filmbildendes Polymer zur Trägerfolie e sowie
- ein filmbildendes Polymer zur Releasefolie

geformt werden, zu einem Verbund zusammengeführt und die Haftkleber durch physikalische und/oder strahlenchemische Behandlung vernetzt werden.

Vorzugsweise wird weiterhin zwischen die Trägerfolie e und die Haftklebeschichten c, c' mindestens eine Primerschicht d geformt. Die mindestens eine Releasefolie umfasst eine Trägerfolie b (Releaseliner), welche gegebenenfalls ein- oder beidseitig eine Releaseschicht (Trennschicht) a, a' aufweist.

Überraschender Weise wurde gefunden, dass sich insbesondere mittels Coextrusionstechnologie doppelseitige Haftklebebänder in einem Prozessschritt in hervorragender Weise herstellen lassen.

Die Erfindung betrifft daher insbesondere ein Verfahren zur Herstellung von doppelseitigen Haftklebebändern, das mittels dem Verfahren der Coextrusion die folgenden Schritte umfasst, wobei

a) 2 identische oder unterschiedliche Schmelzhaftkleber extrudiert werden,
b) die Trägerfolie extrudiert wird,
c) die Releasefolie bestehend aus Trägerfolie (Releaseliner) und gegebenenfalls Trennschicht(en) extrudiert wird,

diese dann zu einem doppelseitigen Verbund zusammengeführt werden und durch physikalische oder strahlenchemische Behandlung der oder die Schmelzhaftkleber vernetzt werden und anschließend zum fertigen doppelseitigen Klebeband aufgerollt wird.

In einer weiteren bevorzugten Auslegung der Erfindung wird parallel zu den oben genannten Extrusionsschichten a), b) und c) auch noch eine oder mehrere Verankerungsschichten (Primerschichten d) zwischen der Trägerfolie e und den beiden Schmelzhaftkleberschichten coextrudiert.

**Schmelzhaftkleber**

Als Schmelzhaftkleber c, c' können nahezu alle aus der Schmelze verarbeitbaren Haftklebemassen eingesetzt werden. In einer bevorzugten Auslegung werden Haftklebemassen auf Basis von Styrolblockcopolymeren eingesetzt. Als Basispolymere eignen sich zum Beispiel Styrol-Isopren-Styrol Blockcopolymere (SIS), StyrolButadienStyrol Blockcopolymere (SBS) oder Styrol-Ethylenbutylen-Styrol Blockcopolymere (SEBS). Neben diesen Blockcopolymeren lassen sich auch funktionalisierte Blockcopolymere der vorher genannten Typen als Basispolymere einsetzten, wobei diese Blockcopolymere dann Maleinsäureanhydrid oder EpoxyFunktionen tragen können. In einer weiteren Auslegung werden als zweite Komponente Diblockcopolymere des Typs Styrol-Isopren, Styrol-Butadien oder StyrolEthylenbutylen hinzugegeben. Diese Komponenten werden zur Modifizierung der klebtechnischen Eigenschaften beigemischt. Durch die unterschiedlichen Glasübergangstemperaturen tritt eine Mikrophasenseperation ein und es bilden sich harte und weiche Domänen, wobei die harten Domänen in einer kugelförmigen Phasenstruktur physikalische Verknüpfungspunkte darstellen, die dem Schmelzhaftkleber nach dem Abkühlen auf Raumtemperatur die Kohäsion geben. Diese Schmelzhaftkleber müssen daher nicht notwendiger Weise zusätzlich, zum Beispiel mit UV-Licht oder mit Elektronenstrahlen, vernetzt werden.

In einer weiteren Auslegung der Erfindung werden Schmelzhaftklebemassen auf der Basis von Blockcopolymeren des allgemeinen Typs P(A)-P(B)-P(A) und P(B)-P(A)-P(B) eingesetzt.

Die Erfindung betrifft somit bevorzugt Schmelzhaftklebemassen auf Basis von zumindest einem Blockcopolymeren, wobei ein Blockcopolymer mindestens die Einheit P(A)-P(B)-P(A) aus wenigstens einem Polymerblock P(B) und wenigstens zwei Polymerblöcken P(A) aufweist, und wobei

- P(A) unabhängig voneinander Homo- oder Copolymerblöcke aus Monomeren A repräsentieren, wobei die Polymerblöcke P(A) jeweils eine Erweichungstemperatur im Bereich von +20 °C bis + 175 °C aufweisen,
- P(B) einen Homo- oder Copolymerblock aus Monomeren B repräsentiert, wobei der Polymerblock P(B) eine Erweichungstemperatur im Bereich von -130 °C bis +10 °C aufweist,
- die Polymerblöcke P(A) und P(B) nicht homogen miteinander mischbar sind.

Die Erfindung betrifft weiterhin Schmelzhaftklebemassen auf Basis von zumindest einem Blockcopolymeren mindestens enthaltend die Einheit P(B)-P(A)-P(B) aus wenigstens zwei Polymerblöcken P(B) und wenigstens einem Polymerblock P(A), wobei

- P(A) unabhängig voneinander Homo- oder Copolymerblöcke aus Monomeren A repräsentieren, wobei die Polymerblöcke P(A) jeweils eine Erweichungstemperatur im Bereich von +20 °C bis +175 °C aufweisen,
- P(B) einen Homo- oder Copolymerblock aus Monomeren B repräsentiert, wobei der Polymerblock P(B) eine Erweichungstemperatur im Bereich von -130 °C bis +10 °C aufweist und
- die Polymerblöcke P(A) und P(B) nicht homogen miteinander mischbar sind.

Im folgenden werden die Polymerblöcke P(A) auch als "Hartblöcke" und die Polymerblöcke P(B) als "Elastomerblöcke" bezeichnet. Weiterhin werden im folgenden die Blockcopolymere, welche die Einheit P(A)-P(B)-P(A) aufweisen, als Triblockcopolymere bezeichnet. Blockcopolymere, welche die Einheit P(B)-P(A)-P(B) aufweisen, als inverse Triblockcopolymere.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistatischen Verfahren wie zum Beispiel Differential Scanning Calorimetry (DSC) angegeben.

Die eingesetzten Triblockcopolymere P(A)-P(B)-P(A) und P(B)-P(A)-P(B) können in weiteren Auslegungsformen der Erfindung noch andere Strukturmerkmale aufweisen. Diese können durch folgende allgemeinen Formeln beschrieben werden:

$$P(B)\text{-}P(A)\text{-}P(B)\text{-}P(A)\text{-}P(B) \qquad (I)$$

$$[P(B)\text{-}P(A)]_n X \qquad (II)$$

$$[P(A)\text{-}P(B)]_n X \qquad (III)$$

$$[P(B)\text{-}P(A)]_n X[P(A)]_m \qquad (IV),$$

- wobei n = 3 bis 12, m = 3 bis 12 und X eine multifunktionelle Verzweigungseinheit darstellt, also ein chemisches Bauelement, über das verschiedene Polymerarme miteinander verknüpft sind,

- wobei die Polymerblöcke P(A) unabhängig voneinander Homo- oder Copolymerblöcke
- aus den Monomeren A repräsentieren, wobei die Polymerblöcke P(A) jeweils eine Erweichungstemperatur im Bereich von +20 °C bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von -130 °C bis + 10 °C aufweisen.

Die Kettenlänge der Polymerblöcke P(A) beziehungsweise P(B) des inversen Triblocks P(B)-P(A)-P(B) ist in bevorzugter Weise derart gewählt, dass sie die des mit ihr bevorzugt mischbaren beziehungsweise assoziierbaren Polymerblocks nicht übersteigt, vorteilhaft 10 % niedriger, sehr vorteilhaft 20 % niedriger ist als diese. Der B-Block kann auch so gewählt werden, dass seine Länge die Hälfte der Blocklänge des B-Blocks des Triblockcopolymers nicht übersteigt oder auch kürzer ist.

Als Monomere für die Elastomerblöcke P(B) werden vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen der Polymerblöcke P(B) auch in Kombination mit einem oder mehreren weiteren Monomeren von kleiner +10 °C bedingen. Entsprechend können bevorzugt die Vinylmonomere gewählt werden.

Für die Präparation der Polymerblöcke P(B) werden vorteilhaft zu 75 bis 100 Gew.-% Acrylsäure- und/oder Methacrylsäurederivate der allgemeinen Struktur

$$CH_2=CH(R^1)(COOR^2) \qquad (V)$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt, und/oder bis zu 25 Gew.-% Vinylverbindungen (V), welche günstigenfalls funktionelle Gruppen enthalten.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie zum Beispiel 2-Ethylhexylacrylat und Isooctylacrylat sowie cyclische Monomere wie zum Beispiel Cyclohexyl- oder Norbornylacrylat und Isobornylacrylat.

Weiterhin können optional als Monomere im Sinne der Definition (V) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (V) für die Elastomerblöcke P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

Ausgangsmonomere für die Polymerblöcke P(A) werden bevorzugt derart ausgewählt, dass die resultierenden Polymerblöcke P(A) mit den Polymerblöcken P(B) nicht mischbar sind und dementsprechend Mikrophasenseparation eintritt. Vorteilhafte Beispiele für Verbindungen, welche als Monomere A eingesetzt werden, sind Vinylaromaten, die auch alkyliert sein können, Methylmethacrylat, Cyclohexylmethacrylat, Isobornylmethacrylat und Isobornylacrylat.

Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch als Copolymer aufgebaut sein, das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führen. In diesem Sinne seien beispielhaft aber nicht ausschließlich Alkylacrylate genannt, die entsprechend der Struktur (V) und dem hierzu gesagten definiert sind.

In einer weiteren Auslegung der Erfindung werden als Polyacrylatschmelzhaftklebemasse Polymere basierend auf

- zumindestens 50 Gew.-% eines Acrylsäureesters und/oder Methacrylsäureesters mit der Formel $CH_2 = CH(R_1)$ $(COOR_2)$, wobei $R_1$ = H oder $CH_3$ und $R_2$ eine lineare, verzweigte, oder cyklische Alkylkette mit 1 - 20 C-Atomen ist.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer sehr bevorzugten Weise werden Acryl- oder Methacrylmomonere für die 3 Schichten A, B und C eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie zum Beispiel Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate beziehungsweise Methacrylate von überbrückten Cycloalkylalkoholen, bestehend aus zumindestens 6 C-Atomen. Die Cycloalkylalkohole können auch substituiert sein, zum Beispiel durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

Neben den oben genannten Acrylaten und Methacrylaten können als weitere Comonomere auch moderate basische Monomere sind zum Beispiel N,N-Dialkylsubstituierte Amide, wie zum Beispiel N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist, eingesetzt werden.

Weitere Beispiele für Comonomere sind Maleinsäureanhydrid, Itaconsäureanhydrid, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat und Tetrahydrofufurylacrlyat, wobei diese Aufzählung nicht abschließend ist.

In einer weiteren sehr bevorzugten Vorgehensweise werden als Comonomere Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren sehr bevorzugten Vorgehensweise Photoinitiatoren mit einer copolymerisierbaren Doppelbindung eingesetzt. Als Photoinitiatoren sind Norrish-I- und -II-Photoinitiatoren geeignet. Beispiele sind zum Beispiel Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie zum Beispiel Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Weiterentwicklung können den Polymeren Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden-und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Keimbildner, Blähmittel, Compoundierungsmittel und/oder Alterungsschutzmittel, zum Beispiel in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- od er multifunktionelle Isocyanate (auch in blockierter Form) oder bi- oder multifunktionelle Epoxide.

Zu einer optionalen Vernetzung - wenn auch nicht zu bevorzugenden Vernetzung - mit UV-Licht können UV-absorbierende Photoinitiatoren zugesetzt werden. Nützliche Photoinitiatoren, welche sehr gut zu verwenden sind, sind Benzoinether, wie zum Beispiel Benzoinmethylether und Benzoinisopropylether, substituierte Acetophenone, wie zum Beispiel 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie zum Beispiel 2-Methoxy-2-hydroxypropiophenon, aromatische Sulfonylchloride, wie zum Beispiel 2-Naphthyl sulfonylchlorid, und photoaktive Oxime, wie zum Beispiel 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Weiterhin können als Schmelzhaftkleber auf Kautschuk basierende Kleber eingesetzt werden. Es sind weite Variationsmöglichkeiten gegeben, sei es, dass er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 - 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Als ebenfalls zuzusetzende Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Trägerfolie

Prinzipiell können zur Herstellung der Trägerfolie e alle filmbildenden und extrusionsfähigen Polymere eingesetzt werden. In einer bevorzugten Auslegung werden Polyolefine eingesetzt. Bevorzugte Polyolefine werden aus Ethylen, Propylen, Butylen und Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie zum Beispiel die Erweichungstemperatur und die Reißfestigkeit.

In einer weiteren bevorzugten Auslegung werden Polyvinylacetate eingesetzt. Polyvinylacetate können neben Vinylacetat auch Vinylalkohol als Comonomer enthalten, wobei der freie Alkoholanteil in weiten Grenzen variiert werden kann.

In einer weiteren bevorzugten Auslegung werden Polyester als Trägerfolie eingesetzt. In einer besonders bevorzugten Auslegung werden Polyester auf Basis von Polyethylenterephthalat (PET) eingesetzt.

In einer weiteren bevorzugten Auslegung werden Polyvinylchloride (PVC) als Folie eingesetzt. Zur Steigerung der Temperaturstabilität können diese Folien noch versteifende Comonomer enthalten oder werden im Zuge des erfinderischen Prozesses Strahlenvernetzt. Weiterhin kann das PVC auch Komponenten enthalten, welche die Folie erweichen lassen (Weichmacher).

In einer weiteren bevorzugten Auslegung werden Polyamide zur Herstellung von Folien eingesetzt. Die Polyamide können aus einer Dicarbonsäure und einem Diamine oder aus mehreren Dicarbonsäuren und Diaminen bestehen. Neben Dicarbonsäuren und Diaminen lassen sich auch höher funktionelle Carbonsäuren und Amine auch in Kombination mit den Dicarbonsäuren und Diaminen einsetzen. Zur Versteifung der Folie werden bevorzugt cyklischen, aromatische oder heteroaromatische Ausgangsmonomere eingesetzt.

In einer weiteren bevorzugten Auslegung werden Polymethacrylate zur Herstellung von Folien eingesetzt. Hier kann durch die Wahl der Monomere (Methacrylate und zum Teil auch Acrylate) die Glasübergangstemperatur der Folie gesteuert werden. Weiterhin können die Polymethacrylate auch Additive enthalten, um zum Beispiel die Flexibilität der Folie zu erhöhen oder die Glasübergangstemperatur ab- oder heraufzusetzen oder die Ausbildung von kristallinen Segmenten zu minimieren.

In einer weiteren bevorzugten Auslegung werden Polycarbonate zur Herstellung von Folien eingesetzt.

Des Weiteren können in einer weiteren Auslegung der Erfindung auf Vinylaromaten und Vinylheteroaromaten basierende Polymere und Copolymere zur Herstellung der Trägerfolie eingesetzt werden. Hierfür steht zum Beispiel der Pool der folgenden Verbindungen zur Verfügung wobei die Aufzählung keinen Anspruch auf Vollständigkeit besitzt: Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren.

Zur Herstellung eines Folienförmigen Materials kann es auch hier angebracht sein, Additive und weitere Komponenten hinzuzugeben, welche die Filmfördernden Eigenschaften verbessern, die Neigung zur Ausbildung von kristallinen Segmenten vermindern und die mechanischen Eigenschaften gezielt verbessern oder auch gegebenenfalls verschlechtern.

In einer weiteren Auslegung der Erfindung werden Folien auf Basis von Polyoxymethylen oder Polyoxyethylen oder Kombinationen aus diesen oder ähnlichen Polyoxyalkylenen eingesetzt.

Releasefolie

Prinzipiell können zur Herstellung der Releasefolie alle filmbildenden und extrusionsfähigen Polymere eingesetzt werden. Die Releasefolie besteht in einer bevorzugten Auslegung der Erfindung aus einer Trägerfolie b, die beidseitig mit einem Releaselack a, a', bevorzugt auf Silikonbasis ausgestattet ist. In einer sehr bevorzugten Auslegung der Erfindung sind die Releaselacke abgestuft, das heißt die Trennwerte unterscheiden sich auf der oberen und unteren Seite. Auf diesem Wege wird die Abrollbarkeit des doppelseitigen Klebebandes gewährleistet.

In einer bevorzugten Auslegung werden als Trägermaterial für die Releasefolie Polyolefine eingesetzt. Bevorzugte Polyolefine werden aus Ethylen, Propylen, Butylen und Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie zum Beispiel die Erweichungstemperatur und die Reißfestigkeit.

In einer weiteren bevorzugten Auslegung werden als Trägermaterial für die Releasefolie Polyvinylacetate eingesetzt. Polyvinylacetate können neben Vinylacetat auch Vinylalkohol als Comonomer enthalten, wobei der freie Alkoholanteil in weiten Grenzen variiert werden kann.

In einer weiteren bevorzugten Auslegung werden als Trägermaterial für die Releasefolie Polyester eingesetzt. In einer besonders bevorzugten Auslegung werden Polyester auf Basis von Polyethylenterephthalat (PET) eingesetzt.

In einer weiteren bevorzugten Auslegung werden als Trägermaterial für die Releasefolie Polyvinylchloride (PVC) eingesetzt. Zur Steigerung der Temperaturstabilität können diese Folien noch versteifende Comonomere enthalten oder werden im Zuge des erfinderischen Prozesses Strahlenvernetzt. Weiterhin kann das PVC auch Komponenten enthalten, welche die Folie erweichen lassen (Weichmacher).

In einer weiteren bevorzugten Auslegung werden als Trägermaterial für die Releasefolie Polyamide eingesetzt. Die Polyamide können aus einer Dicarbonsäure und einem Diaminen oder aus mehreren Dicarbonsäuren und Diaminen bestehen. Neben Dicarbonsäuren und Diaminen lassen sich auch höher funktionelle Carbonsäuren und Amine auch in Kombination mit den Dicarbonsäuren und Diaminen einsetzen. Zur Versteifung der Folie werden bevorzugt cyklischen, aromatische oder heteroaromätische Ausgangsmonomere eingesetzt.

In einer weiteren bevorzugten Auslegung werden als Trägermaterial für die Releasefolie Polymethacrylate eingesetzt. Hier kann durch die Wahl der Monomere (Methacrylate und zum Teil auch Acrylate) die Glasübergangstemperatur der Folie gesteuert werden. Weiterhin können die Polymethacrylate auch Additive enthalten, um zum Beispiel die Flexibilität der Folie zu erhöhen oder die Glasübergangstemperatur ab- oder heraufzusetzen oder die Ausbildung von kristallinen Segmenten zu minimieren.

In einer weiteren bevorzugten Auslegung werden als Trägermaterial für die Releasefolie Polycarbonate eingesetzt.

Des weiteren können in einer weiteren Auslegung der Erfindung auf Vinylaromaten und Vinylheteroaromaten basierende Polymere und Copolymere zur Herstellung der Releasefolien eingesetzt werden. Hierfür stehen zum Beispiel der Pool der folgenden Verbindungen zur Verfügung wobei die Aufzählung keinen Anspruch auf Vollständigkeit besitzt: Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin. N-Vinylphthalimid, Methylstyrol, 3,4-Dimethoxystyrol, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -ethacrylat sowie Mischungen aus denjenigen Monomeren.

Zur Herstellung eines folienförmigen Materials kann es auch hier angebracht sein, Additive und weitere Komponenten hinzuzugeben, welche die filmfördernden Eigenschaften verbessern, die Neigung zur Ausbildung von kristallinen Segmenten vermindern und die mechanischen Eigenschaften gezielt verbessern oder auch gegebenenfalls verschlechtern.

In einer weiteren Auslegung der Erfindung werden als Trägermaterial für die Releasefolie Polyoxymethylen oder Polyoxyethylen oder Kombinationen aus diesen oder ähnlichen Polyoxyalkylenen eingesetzt.

In einer weiteren bevorzugten Auslegung der Erfindung können auch zweischichtige Releasefolien eingesetzt werden. In diesem Fall besitzen die Folien selbst antihaftende Eigenschaften. In diesem Fall werden besonders bevorzugt Flour enthaldende Polymere eingesetzt, wobei durch Steigerung des Fluoranteils im Polymer die antihaftenden Eigenschaften verstärkt werden.

Um auf zwei Seiten unterschiedliche antihaftende Eigenschaften zu erreichen, kann es weiterhin erforderlich sind, die Releasefolie auf einer Seite zu prägen. Dies kann durch die Form der Extrusionsdüse geschehen oder durch eine nach der Extrusion durchgerührte Walzung der Oberfläche, wobei dann die Walze bevorzugt ein Struktur enthält, die auf die Releasefolie übertragen werden soll.

## Releaseschicht

Die Releaseschichten a, a' basieren in einer bevorzugten Auslegung auf Silikonbasis oder fluorierten Polymeren.

Silicone, in der Chemie Polyorganosiloxane genannt, ähneln in ihrer Struktur organisch modifiziertem Quarz. Sie bestehen aus einem Gerüst, das abwechselnd aus Silicium und aus Sauerstoff aufgebaut ist. Dieses Gerüst kann durch organische, kohlenstoffhaltige Gruppen verschiedenartig abgewandelt werden. Nahezu alle Siliconprodukte lassen sich von den drei Rohstoffgruppen ableiten:

- Siliconöle
- Siliconkautschuke
- Siliconharze

Für die Beschichtung aus der Schmelze ist es von Vorteil, wenn die Materialien ein Vernetzungspotential aufweisen, so zum Beispiel durch Vernetzung mit UV-Licht. Diese Verbindungen werden als 100 % Systeme beschichtet und weisen zum Beispiel: EpoxyGruppen auf, die dann nach der UV Aktivierung mit einem Photokationenerzeuger vernetzen und somit einen widerstandsfähige Releaseschicht ausbilden. Als UV-Photokationenerzeuger lässt sich zum Beispiel das Iodonium Salz UV 9385 C der Firma GE Bayer Silicones einsetzen. Als weiterer Photoinitiator lässt sich auch UV 9380 C und UV 9390 C der Firma GE Bayer Silicones einsetzen. Als vernetzende EpoxyGruppen enthaltenden Silikone lassen sich UV 9600, UV 9300, UV 9315, UV 9400 oder UV 9500 der Firma GE Bayer Silicones einseszten. Weiterhin kann, um die Releasewirkung zu kontrollieren, Additive hinzugegeben werden, wie zum Beispiel Trennkraftregler. Solche Additive sind zum Beispiel UV 9440E oder UV9430 der Firma GE Bayer Silicones.

Weiterhin können Siliconkautschuke der Reihe ELASTOSIL® von Wacker als anwendungsfertige Einkomponentenmassen von fließfähiger bis standfester Konsistenz eingesetzt werden. Diese reagieren mit der Feuchtigkeit der Luft zu einem elastischen Silicongummi.

Unter Luftfeuchtigkeit setzt die Vernetzung unter Abgabe von Spaltprodukten ein. Je nach eingesetztem Vernetzer unterscheidet man folgende Systeme:

- Basische oder Amin-Systeme: Geringe Mengen eines Amins werden abgespalten
- Saure oder Acetoxy-Systeme: Geringe Mengen Essigsäure werden abgespalten

Neutrale oder Oxim- beziehungsweise Alkoxy-Systeme: Geringe Mengen eines Oxims beziehungsweise Alkohols werden abgespalten.

Weiterhin können auch Silikonwachse als Trennschichten eingesetzt werden.

**Primerschicht**

Als Primer d werden in der Regel Verbindungen eingesetzt, die durch reaktive Gruppen chemische Bindungen zwischen Trägerfolie und Schmelzhaftkleber herstellen, oder die in der Wärme aktiviert werden und somit eine starke Haftung zur Trägerfolie und zur Schmelzhaftkleber ausbilden. Zu den Wärmeaktivierbaren Primern gehören zum Beispiel PVC/PVAc Copolymere, die zum Beispiel auch als Siegelschichten für Polyesterfolien eingesetzt werden. Als Reaktivprimer werden zum Beispiel Verbindungen eingesetzt, die Isocyanat oder Aziridin Gruppen enthalten, die dann bei der Zusammenführung mit der Trägerfolie und dem Schmelzhaftkleber chemische Reaktionen eingehen können. Dies gilt auch für die sogenannten Saran-Primer.

Weiterhin lassen sich aber auch Polymere hervorragend einsetzen, die aufgepropfte funktionelle Gruppen tragen, wie zum Beispiel Maleinsäureanhydrid, Hydroxy oder Epoxy. Um eine Reaktion mit dem Träger und/oder der Haftklebemasse zu ermöglichen, kann es von Vorteil sein, wenn beschleunigende Substanzen hinzugegeben werden, die entweder direkt die Reaktion beschleunigen oder durch zum Beispiel UV-Licht erst in situ erzeugt werden. Hier können zum Beispiel Lewis-Säuren der Lewis-Basen geeignet sein. Als Lewis Basen zur Beschleunigung von zum Beispiel Epoxiden sind sehr gut aminische Bindungen geeignet.

Als Lewissäuren lassen sich zum Beispiel Bortriflouride oder Zinksalze einsetzen. Als UV-Photokationenerzeuger sind zum Beispiel Iodoniumsalze geeignet. Des weiteren sind aber auch UV-Basenerzeuger bekannt.

**Aufbau des doppelseitigen Haftklebebandes**

In einer bevorzugten Auslegung beträgt die Schichtdicke der Trägerfolie e zwischen 5 und 500 $\mu$m, sehr bevorzugt zwischen 10 und 100 $\mu$m.

In einer bevorzugten Auslegung beträgt die Schichtdicke des Schmelzhaftklebers c und c' zwischen 5 und 500 $\mu$m, sehr bevorzugt zwischen 10 und 100 $\mu$m. Die Schichtdicken des Schmelzhaftklebers c und c' sind in einer bevorzugten Auslegung der Erfindung identisch, können sich aber auch, wenn insbesondere unterschiedliche Klebkräfte auf beiden Seiten (offene und geschlossene Seite) erforderlich sind, in der Schichtdicke unterscheiden. Zur Lösung dieses Problems lassen sich weiterhin auch zwei unterschiedliche Schmelzhaftkleber c und c' auf beiden Seiten einsetzen.

In einer bevorzugten Auslegung beträgt die Schichtdicke der Releasefolie (Summe aus Releaseschicht a, Releaseschicht a' und Trägerfolie b für Releasefolie) zwischen 5 und 100$\mu$m, sehr bevorzugt zwischen 10 und 50$\mu$m. Der Masseauftrag der Releaseschichten a und a' beträgt bevorzugt zwischen 1.0 und 4 g/m$^2$, sehr bevorzugt zwischen 2 und 3 g/m$^2$ auf jeder Seite.

Die Schichtdicke der Primerschicht oder -schichten (d) auf der jeweiligen Trägerfolienseite e beträgt bevorzugt zwischen 0.5 und 5 $\mu$m sehr bevorzugt zwischen 1 und 4 $\mu$m.

**Beschichtungsverfahren**

Zur Herstellung des doppelseitigen Haftklebebandes werden die oben beschriebenen Komponenten aus der Schmelze beschichtet.

Für das Herstellungsverfahren ist es daher erforderlich, das Lösemittel von den einzelnen Komponenten zu entfernen, und zwar durch Aufkonzentration durch Destillation im Reaktor in einem Batch- oder Kaskadenverfahren. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Nach der Aufkonzentration wird der oder die Hotmelt(s) aus der Schmelze weiterverarbeitet.

Weiterhin kann es erforderlich sein, dass zu den einzelnen Komponenten Additive, Füllstoffe, Gleitmittel, Antiverblockungsmittel, etc. hinzugemischt werden müssen. Zur homogenen Einarbeitung in die Schmelze wird bevorzugt ein Doppelschneckenextruder oder ein Planetwalzenextruder eingesetzt.

In dem erfinderischen Verfahren werden die Komponenten im Coextrusionsverfahren beschichtet. Diese arbeitet nach dem Adapterverfahren, indem die Komponenten schichtenweise in einem Coextrusionsadapter ("Feed Block") übereinander gelegt werden. Dieser Verbund wird dann in einer nachgeschalteten Extrusionsdüse zum Film ausgeformt und vorzugsweise auf eine chill-roll oder einen Liner aufgelegt werden. Die Verfahrensvariante der Mehrkanaldüse (Multi Manifold Die, MMD) wird erfindungsgemäß angewandt. Hiermit können größere Viskositätsunterschiede bewältigt werden, insbesondere wenn die separaten Strömungskanäle thermisch voneinander isoliert gestaltet werden und/oder die gemeinsame Fließstrecke durch eine geeignete Düsenlippengeometrie sehr kurz gehalten werden. Um die Prozesskomplexität durch die hohe Verteilerkanalanzahl für den Bediener überschaubar zu gestalten, kann auch eine Kombination aus Adapter- und Mehrkanaldüsencoextrusion eingesetzt werden. Hier werden in der MMD nur die Komponenten separat ausgeformt, deren Viskositäten auch durch geeignete Prozessparameter (zum Beispiel Temperaturführung, gemeinsame Verweilzeit, etc.) nicht anzunähern sind. Hierbei wird die Gestaltung der Fließkanäle entsprechend den Strömungs- und Viskositätsgegebenheiten der extrudierten Komponenten ausgewählt. Geeignete Adapter- und Düsensysteme können zum Beispiel von der Cloeren Company (Orange, Texas), der Kuhne GmbH (St. Augustin, Deutschland) oder Extrusion Dies, Incoporated (Chippewa Falls, Wisconsin) bezogen werden. Ein geeigneter Aufbau ist unter anderem im deutschen Patent Nr. 197 16 996 C1 beschrieben.

Mit einem der zuvor beschriebenen, auf die Rohstoffe abgestimmten Coextrusionsaufbau werden in einem besonders bevorzugten Fall alle gewünschten Schichten umfassend Releasefolie, Trägerfolie, Haftkleber und gegebenenfalls Primer a, a', b, c, c', d und e in einem Schritt hergestellt. Je nach den Anforderungen an die Komplexität des Prozesses und an das Klebeband und die eingesetzten Materialien, kann gegebenenfalls auch auf einige Schichten verzichtet werden. Zum Beispiel kann durch die geeignete Wahl der Haftklebemassen c und c' sowie der Trägerfolie e auch auf eine oder zwei Primerschichten d verzichtet werden. Weiterhin kann es vorkommen, dass bei der geeigneten Wahl der Haftklebemasse c und c' nur einzelne Komponenten der Releasefolie, wie zum Beispiel Trägerfolie b oder Trägerfolie b und Releaseschicht a' benötigt werden (b und a, a' sowie c für Transfertape). Zur Reduzierung der Prozesskomplexität kann auch jedoch nicht erfindungsgemäß auf die inline-Coextrusion eines Releaseliners a, a', b verzichtet werden.

Für die erfinderische Beschichtung werden die einzelnen Komponenten in Form von Polymeren oder in Form von Reaktivsystemen getrennt zur beschriebenen Coextrusionsanordnung gefördert. Dies geschieht als Schmelze durch handelsübliche Schmelzgeräte, Fassschmelzen, Extruder, etc. Der erforderliche Druckaufbau kann pneumatisch, im Extruder, durch geeignete Schmelzepumpen oder anderweitige, handelsübliche Schmelz- und Förderorgane erfolgen. In der Coextrusionsapparatur werden die Schmelzeströme gleichzeitig oder nacheinander zusammengeführt, in einer Düsenlippe zum Film ausgeformt und nachfolgend auf eine chill-roll oder ein Substrat aufgelegt. Auch eine Transferbeschichtung über eine antiadhäsive Oberfläche, mittels antiadhäsivem Transportband oder auch der Transfer mittels Wasserfilm sind möglich.

Für das erfinderische Verfahren kann es von Vorteil sein, wenn nach dem Extrusionsprozess Druck auf den Schichtenverbund ausgeübt wird, um zum Beispiel die Verankerung von einzelnen Schichten miteinander zu verbessern. Dies kann mittels geeigneter, antiadhäsiv ausgerüsteter Walzen erfolgen.

Weiterhin kann es auch für das Verfahren von Vorteil jedoch nicht erfindungsgemäß sein, wenn einzelne Extrusionsschritte von einander getrennt werden. So kann zum Beispiel die Trägerfolie e mit den beiden optionalen Primerschichten d in einem Schritt coextrudiert werden, mit Haftklebemasse c beschichtet, mit einer coextrudierten Releasefolie (a, a' und b) kaschiert werden und letztendlich das doppelseitige Haftklebeband durch Extrusion der Haftklebemasse c' auf den Verbund hergestellt werden. Diese Arbeitsschritte können alle inline erfolgen, aber auch die Kaschierung oder Beschichtung von separat hergestellten Release- oder Trägerfolien ist möglich. Zum Zusammenkaschieren bedient man sich konventioneller Kaschierwalzen, die zum Beispiel eine Gummierung mit bestimmter Härte besitzen, oder - wenn direkter Kontakt zur Haftklebemasse besteht - eine dreidimensional gehärtete Silikonschicht oder eine Keramikmatrix mit einem coating aus speziellen, antiadhäsiven Oberflächenstrukturen aufweisen.

Weiterhin kann es erforderlich sein, dass zur optionalen UV-Vernetzung der Haftklebemassen c und c' oder der Releaseschichten a und a' mittels kurzwelliger ultravioletter Bestrahlung in einem Wellenlängenbereich von 200 bis 400 nm, je nach verwendetem UV-Photoinitiator, bestrahlt wird, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und dem Maßes der Orientierung angepasst.

In einem weiteren bevorzugten Vernetzungsverfahren werden die Haftklebemassen c und c' und oder die Releaseschichten a und a' mit Elektronenstrahlen vernetzt. Typische Bestrahlungsvorrichtungen, die zum Einsatz kommen können, sind Linearkathodensysteme, Scannersysteme beziehungsweise Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 und 500 kV, vorzugsweise 80 und 300 kV. Die angewandten Bestrahlungsdosen bewegen sich zwischen 5 bis 150 kGy, insbesondere zwischen 20 und 100 kGy. Es können auch beide Vernetzungsverfahren angewendet werden oder andere Verfahren, die hochenergetische Bestrahlung ermöglichen.

Wenn möglich, kann das gesamte doppelseitige Klebeband in einem Arbeitsgang durchvernetzt werden. Falls erforderlich, kann der oder können die Vernetzungsvorgänge auch an geeigneten Stellen des Gesamtverfahrens erfolgen, an dem separate Vernetzungsschritte einer oder mehrerer Komponenten besonders vorteilhaft sind. Dies kann zum Beispiel bei Überschreitung bestimmter Materialdicken oder der besonderen Strahlungsempfindlichkeit einzelner Komponenten der Fall sein.

Ausführungsbeispiele

Die Erfindung wird im folgenden durch Beispiele beschrieben, ohne sich durch die Wahl der untersuchten Proben unnötig beschränken zu wollen.

Folgende Testmethoden wurden zur Ausprüfung des doppelseitigen Haftklebebandes angewendet.

180. Klebkrafttest (Test A)

Ein 20 mm breiter Streifen einer auf einem Polyester oder silikonisiertem Trennpapier gecoateten Acrylathaftklebemasse wurde auf Stahlplatten (Test A1) oder auf PE-Platten (Test A2) aufgebracht. Der Haftklebestreifen wurde zweimal mit einem 2 kg Gewicht auf das Substrat aufgedrückt. Das Klebeband wurde anschließend sofort mit 30 mm/min und im 180 Winkel vom Substrat abgezogen. Die Stahlplatten wurden zweimal mit Aceton und einmal mit Isopropanol gewaschen. Es wurden jeweils neue PE-Platten eingesetzt. Die Messergebnisse sind in N/cm angegeben und sind gemittelt aus drei Messungen. Alle Messungen wurden bei Raumtemperatur unter klimatisierten Bedingungen durchgeführt.

Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpressdruck das Klebeband viermal auf den Stahlträger gedrückt. Bei Raumtemperatur wurde mit einem 1 kg-Gewicht belastet. Die gemessenen Scherstandzeiten sind in Minuten angegeben und entsprechen dem Mittelwert aus drei Messungen.

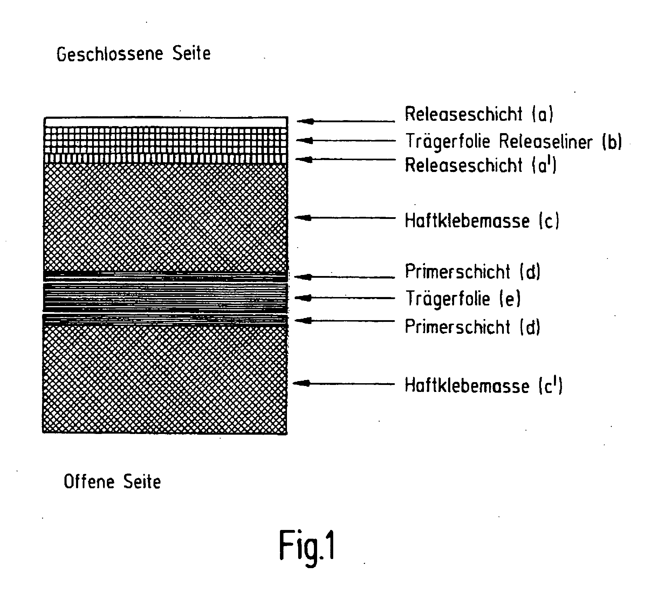

Ein bevorzugtes doppelseitiges Haftklebeband ist in Fig. 1 dargestellt. Es umfasst von der geschlossenen bis zur offenen Seite die Schichten: Releaseschicht a, Trägerfolie b, Releaseschicht a', Haftklebeschicht c, Primerschicht d, Trägerfolie e und die Haftklebemasseschicht c'.

***Herstellung der Haftklebemassen c und c'***

Polymer 1

Ein für radikalische Polymerisationen konventioneller 200 L-Reaktor wurde mit 20 kg Methylacrylat, 60 kg 2-Ethylhexylacrylat, 10 kg Acrylsäure und 53,3 kg Aceton/Isopropanol (97:3) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 und 10 h wurde mit jeweils 15 kg Aceton/Isopropanol (97:3) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Anschließend wird das Polymer in der Wärme bei 120 °C im Vakuum vom Lösemittel befreit.

Folgende weitere Materialien wurden zur Herstellung eingesetzt:

Trägerfolie: Moplen RP 220N (Random Copolymer, Polypropylen-Basis, Schmelztemperatur von 147°C, von Basell Polyolefins)

Primer: Fusabond P MD51 1 D (chemisch modifiziertes Polypropylen, Schmelzepunkt bei 162°C).

Als Releaseliner wird ein handelsübliches, beidseitig silikonisiertes Glassinepapier mit abgestuften Trennkräften und einer Grammatur von 92 g/m$^2$ eingesetzt.

**Beispiel 1** (nicht gemäß der Erfindung) :

Liner wird wegen Komplexität nicht coextrudiert!

Haftklebeschichten c und c': jeweils 20 g/m$^2$
Primerschichten d: 3 g/m$^2$
Trägerschicht e: 12 µm

Verfahren zur Herstellung eines doppelseitigen Haftklebebandes

Die unterschiedlichen Schichten wurden in separaten Einschneckenextrudern plastifiziert und gefördert. Durch die Drehzahl und Geometrie der Schnecke wird die Förderleistung eingestellt und damit auch die Schichtdickenverhältnisse der einzelnen Schichten kontrolliert werden. Die Einschneckenextruder sind über temperierte Leitungen mit der Coextrusionsvorrichtung verbunden. Vor der Einführung in die Coextrusionsdüse werden die Materialien noch einmal gefiltert, um Störungen durch Gel und Fremdkörper zu vermeiden.

Der Träger wird zunächst im Feedblock mit dem Primer coextrudiert. Hierzu wird der Feedblock der Kuhne GmbH, St. Augustin (vgl. Patentschrift DE 38 03 412 C1) auf eine Temperatur von 195 °C eingestellt. Die Schmelzetemperatur der Trägerkomponente beträgt 210 °C, während die Primerschichten mit 185 °C extrudiert werden. Der Primer-Schmelzestrom wird in nur einem Extruder erzeugt und durch eine T-Verteilung in die beiden separaten Schmelzeströme aufgeteilt. Hierbei ist auf eine symmetrische Auslegung der separaten Fließstrecken für die Primer-Ströme zu achten. Eventuell noch auftretende Durchsatzunterschiede können durch den besonderen Aufbau des Kuhne-Mehrschichtadapters angepasst werden. Gleichmäßige Zusammenströmgeschwindigkeiten der Schmelzeströme im Adapter und die Schichtenverteilung können dabei durch eine stufenlose Verstellung mittels eines drehbaren Bolzens eingestellt werden. Hierzu sind die Bolzen mit Drossel- und Verteilkanälen ausgestattet, die eine feinfühlige Anpassung der Verteilung an die rheologischen Gegebenheiten zulassen. Hiermit lassen sich auch Schmelzen mit deutlich unterschiedlichem Viskositätsverhalten beziehungsweise voneinander abweichender Temperaturführung mittels Feedblock coextrudieren.

Der Träger-Primer-Verbund strömt nun in die Mehrkanaldüse, die auf eine Temperatur von 180 °C temperiert ist. Hierbei ist auf besonders kurze Fließwege und einen ausreichenden Durchsatz zu achten, um den Wärmeverlust von der heißen Trägerschicht durch den Primer in die kühlere Düsenwandung gering zu halten. In der MMD werden nun die mit 170 °C extrudierten Kleberströme in separaten Kleiderbügerteilern auf die Beschichtungsbreite aufgeformt. Diese werden dann beidseitig auf den mittig einlaufenden, in der MMD bereits ausgeformten Träger-Primer-Verbund aufgelegt und durch die flexiblen Düsenlippen nachkalibriert. Hierbei ist auf eine besonders kurze Lippenlänge zu achten, um die Viskositätsverhältnisse durch Wärme-Ausgleichsströme der unterschiedlichen Schmelzeschichten kontrollieren zu können. Der entstandene 5-Schicht-Verbund wird verstreckt und auf den Fluidfilm aufgelegt. Die schädigungsfreie Elektronenstrahlvernetzung mittels Fluidfilm und nachträglichem inline-Transfer ist an sich bekannt.

Die Austrittsbreite des coextrudierten Verbunds beträgt 330 mm, der Düsenspalt wird auf 200 µm eingestellt. Die Schichtdicke des Verbunds wird durch geeignete Abstimmung der Schmelzeströme und der Abzugsgeschwindigkeit der Kühlwalze eingestellt. Die Bahngeschwindigkeit betrug 40 m/min, die ESH-Vernetzung der Haftklebemasse erfolgt inline bei 30 kGy und 180 kV Beschleunigungsspannung. Eingesetzt wurde eine Anlage der Fa. Electron Crosslinking AB, Halmstad, Schweden. Dabei wurde in der Bestrahlungszone der Luftsauerstoff durch Spülen mit reinem Stickstoff verdrängt. Der vernetzte Verbund wird mittels Anlegewalze vom Fluidfilm auf den Releaseliner übertragen und zur Rolle gewickelt.

**Beispiel 2** (nicht gemäß der Erfindung):

Liner wird wegen Komplexität nicht coextrudiert!

Haftklebeschichten c und c': jeweils 60 g/m$^2$
Primerschichten d: 5 g/m$^2$
Trägerschicht e: 25 µm

Die veränderten Schichtdicken wurden, wie zuvor beschrieben, über den im Beispiel 2 veränderten Extruderdurchsatz gesteuert. Abweichend vom Beispiel 1 wurde zudem der Düsenspalt auf 300 µm eingestellt und die Bahngeschwindigkeit auf 18 m/min reduziert. Die weiteren Einstellungen wurden analog dem Beispiel 1 beibehalten, wobei die Schichtenverteilung im Mehrschichtadapter durch Veränderung der Bolzenposition neu angepasst wurde.

**Resultate**

Zur Beurteilung der Eigenschaften wurden die Beispiele 1 und 2 nach 14-tägiger Lagerung bei 23 °C und 50 % Luftfeuchtigkeit untersucht. Die Klebebandrollen beider Beispiele ließen sich problemlos abrollen. Anschließend wurden die klebtechnischen Eigenschaften nach den Testmethoden A und B ermittelt:

Tabelle 1: Übersicht der ermittelten klebtechnischen Eigenschaften

| Beispiel | Klebkraft auf Stahl (Test A1) | Klebkraft auf PE (Test A2) | Scherstandzeiten (Test B) |
|----------|-------------------------------|----------------------------|---------------------------|
| 1        | 5.2 N/cm                      | 0.9 N/cm                   | 2770 min.                 |
| 2        | 6.3 N/cm                      | 1.5 N/cm                   | 1455 min.                 |

Die klebtechnischen Eigenschaften belegen, dass mit dem erfinderischen Verfahren konventionelle doppelseitige Klebebänder für industrielle Anwendungen zur Verfügung gestellt werden können.

<u>Bezugszeichenliste</u>

a    Releaseschicht

a'   Releaseschicht

b    Trägerfolie (Releaseliner)

c    Haftklebeschicht

c'   Haftklebemasseschicht

d    Primerschicht

e    Trägerfolie

**Patentansprüche**

1. Verfahren zur Herstellung eines doppelseitigen Haftklebebandes mit einer geschlossenen und offenen Seite aufweisend eine Trägerfolie (e), welche beidseitig mit einer Haftklebeschicht (c, c') ausgerüstet ist, wobei die Trägerfolie (e) eine filmische Trägerfolie ist, die nicht auf Kautschukbasis beruht, und wobei sich auf der geschlossenen Seite auf der einen Haftklebeschicht (c) mindestens eine Releasefolie befindet, wobei Lösemittel von den einzelnen Komponenten durch Destillation im Reaktor in einem Batch- oder Kaskadenverfahren entfernt wird, wobei aus der Schmelze

   - zwei identische oder unterschiedliche Haftklebemassen zu den Haftklebeschichten (c, c'),
   - ein filmbildendes Polymer zur Trägerfolie (e) sowie
   - ein filmbildendes Polymer zur Releasefolie

   geformt werden, zu einem Verbund zusammengeführt und die Haftkleber durch physikalische und/oder strahlenchemische Behandlung vernetzt werden, die Herstellung mittels eines Coextrusionsverfahrens erfolgt, wobei das Coextrusionsverfahren nach dem Adapterverfahren erfolgt, indem die Komponenten schichtenweise übereinander gelegt und mittels Mehrkanaldüse ausgeformt werden.

2. Verfahren nach Anspruch 1, **dadurch gekennzeichnet, dass** zwischen die Trägerfolie (e) und die Haftklebeschichten (c, c') mindestens eine Primerschicht (d) geformt wird.

3. Verfahren nach Anspruch 1 oder 2, **dadurch gekennzeichnet, dass** zur mindestens einen Releasefolie eine Trägerfolie (b) (Releaseliner) geformt wird, welche gegebenenfalls ein- oder beidseitig eine Releaseschicht (a, a') umfasst.

4. Verfahren nach Anspruch 1, **dadurch gekennzeichnet, dass** die einzelnen Komponenten in Form von Polymeren oder in Form von Reaktivsystemen als Schmelze getrennt zu einer Coextrusionsanordnung gefördert werden, dort gleichzeitig oder nacheinander zusammengeführt, in einer Düsenlippe zum Film ausgeformt und nachfolgend aufgelegt werden.

5. Verfahren nach einem der Ansprüche 1 bis 4, **dadurch gekennzeichnet, dass** die Herstellung unter Druck auf den Schichtenverbund erfolgt.

6. Verfahren nach einem der Ansprüche 1 bis 5, **dadurch gekennzeichnet, dass** die Schichtdicke der Trägerfolie (e) zwischen 5 und 500 $\mu$m, bevorzugt zwischen 10 und 100 $\mu$m beträgt.

7. Verfahren nach einem der Ansprüche 1 bis 6, **dadurch gekennzeichnet, dass** die Schichtdicke der jeweiligen Haftklebeschicht (c, c') zwischen 5 und 500 $\mu$m, bevorzugt zwischen 10 und 100 $\mu$m beträgt, wobei die Dicke der beiden Haftklebeschichten (c, c') identisch oder unterschiedlich ist.

8. Verfahren nach einem der Ansprüche 1 bis 7, **dadurch gekennzeichnet, dass** die Schichtdicke der Releasefolie zwischen 5 und 100 $\mu$m beträgt, vorzugsweise zwischen 10 und 50 $\mu$m.

9. Verfahren nach Anspruch 8, **dadurch gekennzeichnet, dass** der Masseauftrag der Releaseschichten (a, a') zwischen 1,0 und 4 g/m$^2$ beträgt, vorzugsweise zwischen 2 und 3 g/m$^2$.

10. Verfahren nach einem der Ansprüche 1 bis 9, **dadurch gekennzeichnet, dass** die Schichtdicke der Primerschicht (d) zwischen 0,5 und 5 $\mu$m beträgt, vorzugsweise zwischen 1 und 4 $\mu$m.

11. Verfahren nach einem der Ansprüche 1 bis 10, **dadurch gekennzeichnet, dass** als Trägerfolie (e) alle filmbildenden und extrusionsfähigen Polymere fungieren, vorzugsweise ausgewählt aus Polyolefinen, Polyvinylacetaten, Polyestern, Polyvinylchloriden, Polyamiden, Polymethacrylaten, Polycarbonaten, auf Vinylaromaten und Vinylheteroaromaten basierenden Polymeren und Copolymeren oder Folien auf der Basis von Polyoxyalkylenen.

12. Verfahren nach Anspruch 11, **dadurch gekennzeichnet, dass** die Trägerfolie (e) ein Polyester ist, vorzugsweise auf der Basis von Polyethylentherephthalat (PET).

13. Verfahren nach einem der Ansprüche 1 bis 12, **dadurch gekennzeichnet, dass** die Haftklebeschichten (c, c') aus Polymeren und/oder Copolymeren gebildet werden, die aus der Schmelze verarbeitbare Haftklebemassen darstellen.

14. Verfahren nach einem der Ansprüche 1 bis 13, **dadurch gekennzeichnet, dass** die Haftklebeschichten (c, c') aus gleichen oder unterschiedlichen Materialien bestehen.

15. Verfahren nach Anspruch 13 oder 14, **dadurch gekennzeichnet, dass** die Haftklebeschichten (c, c') aus Haftklebemassen auf Basis von Styrolblockcopolymeren, auf der Basis von mindestens einem Blockcopolymeren des allgemeinen Typs P(A)-P(B)-P(A) (Triblockpolymere) und P(B)-P(A)-P(B) (inverse Triblockpolymere), auf der Basis von mindestens einem Blockcopolymeren mindestens enthaltend die Einheit P(B)-P(A)-P(B) aus wenigstens zwei Polymerblöcken P(B) und wenigstens einem Polymerblock P(A) oder aus Polyacrylatschmelzklebemassen aus Polymeren basierend auf zumindest 50 Gew.-% eines Acrylsäureesters und/oder Methacrylsäureesters mit der Formel $CH_2 = CH(R_1)(COOR_2)$, wobei $R_1$ = H oder $CH_3$ und $R_2$ eine lineare, verzweigte oder zyklische Alkylkette mit 1 - 20 C-Atomen ist, gebildet werden.

16. Verfahren nach einem der Ansprüche 1 bis 15, **dadurch gekennzeichnet, dass** als Trägerfolie (b) der Releasefolie alle filmbildenden und extrusionsfähigen Polymere fungieren, vorzugsweise ausgewählt aus Polyolefinen, Polyvinylacetaten, Polyestern, Polyvinylchloriden, Polyamiden, Polymethacrylaten, Polycarbonaten, auf Vinylaromaten und Vinylheteroaromaten basierenden Polymeren und Copolymeren oder Folien auf der Basis von Polyoxyalkylenen.

17. Verfahren nach Anspruch 16, **dadurch gekennzeichnet, dass** die Trägerfolie (b) der Releasefolie ein Polyester ist, vorzugsweise auf der Basis von Polyethylentherephthalat (PET).

18. Verfahren nach Anspruch 16 oder 17, **dadurch gekennzeichnet, dass** die Releasefolie aus einer Trägerfolie (b) besteht, die mit einer Releaseschicht (a, a') in Form eines Releaselackes, vorzugsweise beidseitig, ausgestattet ist.

19. Verfahren nach einem der Ansprüche 1 bis 18, **dadurch gekennzeichnet, dass** die Releaseschichten (a, a') eine Schicht auf Silikonbasis oder fluorierten Polymeren darstellen.

20. Verfahren nach Anspruch 18 oder 19, **dadurch gekennzeichnet, dass** der Releaselack (a, a'), gegeneinander in seinen Trennwerten abgestuft ist.

21. Verfahren nach einem der Ansprüche 1 bis 20, **dadurch gekennzeichnet, dass** zweischichtige Releasefolien eingesetzt werden, vorzugsweise Fluor enthaltende Polymere, wobei diese, zur Steigerung der antihaftenden Eigenschaften, gegebenenfalls Prägungen aufweisen.

22. Verfahren nach einem der Ansprüche 1 bis 21, **dadurch gekennzeichnet, dass** die Primerschicht (d) aus PVC/ PVAc Copolymeren, aus Verbindungen, die loscyanat-oder Aziridin-Gruppen enthalten, und aus Polymeren, die aufgepropfte funktionelle Gruppen tragen, gebildet wird.

**Claims**

1. Process for producing a double-sided pressure-sensitive adhesive tape with a closed and an open side, comprising a carrier film (e) provided on both sides with a pressure-sensitive adhesive layer (c, c'), the carrier film (e) being a carrier film not based on rubber, and at least one release film being located on the closed side on one pressure-sensitive adhesive layer (c), solvent being removed from the individual components by distillation in the reactor in a batch process or cascade process,

   - two identical or different pressure-sensitive adhesives, to form the pressure-sensitive adhesive layers (c, c'),
   - a film-forming polymer, to form the carrier film (e), and
   - a film-forming polymer, to form the release film,

   being formed from the melt and combined to form an assembly, and the pressure-sensitive adhesives being crosslinked by physical treatment and/or chemical radiation treatment, the producing taking place by means of a coextrusion process, the coextrusion process taking place by the adapter process, with the components being laid layerwise one above another and shaped by means of a multi-manifold die.

2. Process according to Claim 1, **characterized in that** at least one primer layer (d) is formed between the carrier film (e) and the pressure-sensitive adhesive layers (c, c').

3. Process according to Claim 1 or 2, **characterized in that**, to form the at least one release film, a carrier film (b) (release liner) is formed which if desired comprises a release layer (a, a') on one or both sides.

4. Process according to Claim 1, **characterized in that** the individual components in the form of polymers or in the form of reactive systems as a melt are conveyed separately to a coextrusion system, where simultaneously or successively they are combined, shaped in a die lip to form the film, and subsequently placed.

5. Process according to any of Claims 1 to 4, **characterized in that** the producing takes place under pressure on the layer assembly.

6. Process according to any of Claims 1 to 5, **characterized in that** the thickness of the carrier film (e) is between 5 and 500 $\mu$m, preferably between 10 and 100 $\mu$m.

7. Process according to any of Claims 1 to 6, **characterized in that** the thickness of each pressure-sensitive adhesive layer (c, c') is between 5 and 500 $\mu$m, preferably between 10 and 100 $\mu$m, the thickness of the two pressure-sensitive adhesive layers (c, c') being identical or different.

8. Process according to any of Claims 1 to 7, **characterized in that** the thickness of the release film is between 5 and 100 $\mu$m, preferably between 10 and 50 $\mu$m.

9. Process according to Claim 8, **characterized in that** the coatweight of the release layers (a, a') is between 1.0 and 4 g/m$^2$, preferably between 2 and 3 g/m$^2$.

10. Process according to any of Claims 1 to 9, **characterized in that** the thickness of the primer layer (d) is between 0.5 and 5 μm, preferably between 1 and 4 μm.

11. Process according to any of Claims 1 to 10, **characterized in that** all film-forming and extrudable polymers function as carrier film (e), preferably selected from polyolefins, polyvinyl acetates, polyesters, polvinyl chlorides, polyamides, polymethacrylates, polycarbonates, polymers and copolymers based on vinylaromatics and vinyl heteroaromatics, or films based on polyoxyalkylenes.

12. Process according to Claim 11, **characterized in that** the carrier film (e) is a polyester, preferably based on polyethylene terephthalate (PET).

13. Process according to any of Claims 1 to 12, **characterized in that** the pressure-sensitive adhesive layers (c, c') are formed of polymers and/or copolymers which represent pressure-sensitive adhesives that can be processed from the melt.

14. Process according to any of Claims 1 to 13, **characterized in that** the pressure-sensitive adhesive layers (c, c') are composed of like or different materials.

15. Process according to Claim 13 or 14, **characterized in that** the pressure-sensitive adhesive layers (c, c') are formed of pressure-sensitive adhesives based on styrene block copolymers, based on at least one block copolymer of the general type P(A)-P(B)-P(A) (triblock polymers) and P(B)-P(A)-P(B) (inverse triblock polymers), based on at least one block copolymer at least containing the unit P(B)-P(A)-P(B) composed of at least two polymer blocks P(B) and at least one polymer block P(A), or of polyacrylate hotmelt adhesives composed of polymers based on at least 50% by weight of an acrylic ester and/or methacrylic ester with the formula $CH_2=CH(R_1)(COOR_2)$, where $R_1$ is H or $CH_3$ and $R_2$ is a linear, branched or cyclic alkyl chain having 1-20 C atoms.

16. Process according to any of Claims 1 to 15, **characterized in that** all film-forming and extrudable polymers function as carrier film (b) of the release film, preferably selected from polyolefins, polyvinyl acetates, polyesters, polvinyl chlorides, polyamides, polymethacrylates, polycarbonates, polymers and copolymers based on vinylaromatics and vinyl heteroaromatics, or films based on polyoxyalkylenes.

17. Process according to Claim 16, **characterized in that** the carrier film (b) of the release film is a polyester, preferably based on polyethylene terephthalate (PET).

18. Process according to Claim 16 or 17, **characterized in that** the release film is composed of a carrier film (b) which is provided with a release layer (a, a' ) in the form of a release varnish, preferably on both sides.

19. Process according to any of Claims 1 to 18, **characterized in that** the release layers (a, a') represent a layer based on silicone or fluorinated polymers.

20. Process according to Claim 18 or 19, **characterized in that** the release varnish (a, a') is mutually graduated in its release values.

21. Process according to any of Claims 1 to 20, **characterized in that** two-layer release films are used, preferably fluorine-containing polymers, and if desired have embossings for the purpose of increasing the antistick properties.

22. Process according to any of Claims 1 to 21, **characterized in that** the primer layer (d) is formed of PVC/PVAc copolymers, of compounds containing isocyanate or aziridine groups, and of polymers which carry grafted-on functional groups.

## Revendications

1. Procédé pour la fabrication d'un ruban auto-adhésif double-face ayant une face cachée et une face libre, comportant un feuille de support (e) qui est munie des deux côtés d'une couche auto-adhésive (c, c'), la feuille de support (e) étant une feuille de support pelliculaire qui n'est pas à base de caoutchouc, et sur la face cachée se trouvant sur ladite une couche autoadhésive (c) au moins un film anti-adhérence, le solvant des composants individuels étant éliminé par distillation dans le réacteur, dans un procédé en mode discontinu ou en cascade, dans lequel à partir des masses fondues

- deux matières autoadhésives, identiques ou différentes, pour les couches autoadhésives (c, c'),
- un polymère filmogène pour la feuille de support (e) ainsi
- qu'un polymère filmogène pour le film anti-adhérence,

sont formés, réunis en un composite et les autoadhésifs sont réticulés par traitement physique et/ou radiochimique, la fabrication s'effectue au moyen d'un procédé de coextrusion, le procédé de coextrusion s'effectuant selon le procédé à élément de raccord, par superposition des composants en couches et extrusion de ceux-ci au moyen d'une buse multicanal.

2. Procédé selon la revendication 1, **caractérisé en ce qu'**entre la feuille de support (e) et les couches autoadhésives (c, c') est formée au moins une couche de primaire (d).

3. Procédé selon la revendication 1 ou 2, **caractérisé en ce que** pour ledit au moins un film anti-adhérence on forme une feuille de support (b) (releaseliner), qui comprend éventuellement d'un côté ou des deux une couche anti-adhérence (a, a').

4. Procédé selon la revendication 1, **caractérisé en ce que** les composants individuels sont envoyés séparément en tant que masse fondue sous forme de polymères ou sous forme de systèmes réactifs à un dispositif de coextrusion, sont réunis simultanément ou successivement dans celui-ci, extrudés en le film dans une lèvre de filière et ensuite appliqués.

5. Procédé selon l'une quelconque des revendications 1 à 4, **caractérisé en ce que** la fabrication s'effectue sous pression sur le composite stratifié.

6. Procédé selon l'une quelconque des revendications 1 à 5, **caractérisé en ce que** l'épaisseur de couche de la feuille de support (e) est comprise entre 5 et 500 $\mu$m, de préférence entre 10 et 100 $\mu$m.

7. Procédé selon l'une quelconque des revendications 1 à 6, **caractérisé en ce que** l'épaisseur de couche de la couche autoadhésive respective (c, c') est comprise entre 5 et 500 $\mu$m, de préférence entre 10 et 100 $\mu$m, l'épaisseur des deux couches autoadhésives (c, c') étant la même ou différente.

8. Procédé selon l'une quelconque des revendications 1 à 7, caractérisé en ce l'épaisseur de couche du film anti-adhérence est comprise entre 5 et 100 $\mu$m, de préférence entre 10 et 50 $\mu$m.

9. Procédé selon la revendication 8, **caractérisé en ce que** l'application de matière des couches anti-adhérence (a, a') est comprise entre 1,0 et 4 g/m$^2$, de préférence entre 2 et 3 g/m$^2$.

10. Procédé selon l'une quelconque des revendications 1 à 9, **caractérisé en ce que** l'épaisseur de couche de la couche de primaire (d) est comprise entre 0,5 et 5 $\mu$m, de préférence entre 1 et 4 $\mu$m.

11. Procédé selon l'une quelconque des revendications 1 à 10, **caractérisé en ce que** comme feuille de support (e) fonctionnent tous les polymères filmogènes et extrudables, de préférence choisis parmi les polyoléfines, poly(acétate de vinyle)s, polyesters, poly(chlorure de vinyle)s, polyamides, poly-méthacrylates, polycarbonates, polymères et copolymères à base de composés vinylaromatiques et composés vinylhétéroaromatiques ou des feuilles à base de polyoxyalkylènes.

12. Procédé selon la revendication 11, **caractérisé en ce que** la feuille de support (e) est un polyester, de préférence à base de poly(éthylène-téréphtalate) (PET) .

13. Procédé selon l'une quelconque des revendications 1 à 12, **caractérisé en ce que** les couches autoadhésives (c, c') sont formées à partir de polymères et/ou copolymères qui représentent des matières autoadhésives aptes à être mises en oeuvre à partir de la masse fondue.

14. Procédé selon l'une quelconque des revendications 1 à 13, **caractérisé en ce que** les couches autoadhésives (c, c') sont constituées de matériaux identiques ou différents.

15. Procédé selon la revendication 13 ou 14, **caractérisé en ce que** les couches autoadhésives (c, c') sont formées à partir de matières autoadhésives à base de copolymères séquencés de styrène, à base d'au moins un copolymère séquencé du type général P (A) -P (B) -P (A) (polymères triséquencés) et P(B)-P(A)-P(B) (polymères triséquencés inverses), à base d'au moins un copolymère séquencé au moins contenant le motif P (B) -P (A) -P (B) constitué d'au moins deux séquences polymères P(B) et d'au moins une séquence polymère P(A) ou à partir de matières adhésives fusibles polyacrylate constituées de polymères à base d'au moins 50 % en poids d'un ester d'acide acrylique et/ou ester d'acide méthacrylique de formule $CH_2=CH(R_1)(COOR_2)$, dans laquelle $R_1$ = H ou $CH_3$ et $R_2$ est une chaîne alkyle linéaire, ramifiée ou cyclique ayant de 1 à 20 atomes de carbone.

16. Procédé selon l'une quelconque des revendications 1 à 15, **caractérisé en ce que** comme feuille de support (b) du film anti-adhérence fonctionnent tous les polymères filmogènes et extrudables, de préférence choisis parmi les polyoléfines, poly(acétate de vinyle)s, polyesters, poly(chlorure de vinyle)s, polyamides, poly-méthacrylates, polycarbonates, polymères et copolymères à base de composés vinylaromatiques et composés vinylhétéroaromatiques ou des feuilles à base de polyoxyalkylènes.

17. Procédé selon la revendication 16, **caractérisé en ce que** la feuille de support (b) du film anti-adhérence est un polyester, de préférence à base de poly(éthylène-téréphtalate) (PET).

18. Procédé selon la revendication 16 ou 17, **caractérisé en ce que** le film anti-adhérence consiste en une feuille de support (b) qui est munie, de préférence des deux côtés, d'une couche anti-adhérence (a, a') sous forme d'une laque anti-adhérence.

19. Procédé selon l'une quelconque des revendications 1 à 18, **caractérisé en ce que** les couches anti-adhérence (a, a') représentent des polymères fluorés ou une couche à base de silicone.

20. Procédé selon la revendication 18 ou 19, **caractérisé en ce que** la laque anti-adhérence (a, a') est graduelle dans ses valeurs de séparation l'une par rapport à l'autre.

21. Procédé selon l'une quelconque des revendications 1 à 20, **caractérisé en ce qu'**on utilise des films anti-adhérence bicouches, de préférence des polymères contenant du fluor, ceux-ci comportant éventuellement des gaufrages pour accroître les propriétés d'anti-adhérence.

22. Procédé selon l'une quelconque des revendications 1 à 21, **caractérisé en ce que** la couche de primaire (d) est formée à partir de copolymères PVC/PVAc, à partir de composés qui contiennent des groupes isocyanate ou aziridine, et à partir de polymères qui portent des groupes fonctionnels greffés.

Geschlossene Seite

Releaseschicht (a)

Trägerfolie Releaseliner (b)

Releaseschicht (a')

Haftklebemasse (c)

Primerschicht (d)

Trägerfolie (e)

Primerschicht (d)

Haftklebemasse (c')

Offene Seite

# Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1506984 A1
- DE 19716996 C1
- DE 3803412 C1

**In der Beschreibung aufgeführte Nicht-Patentliteratur**

- **FOUASSIER.** Photoinititation, Photopolymerization and Photocuring: Fundamentals and Applications. Hanser-Verlag, 1995
- **ERGÄNZEND ; CARROY et al.** Chemistry and Technology of UV and EB Formulation for Coatings, Inks and Paints. SITA, 1994
- **DONATAS SATAS.** Handbook of Pressure Sensitive Adhesive Technology. 1989
- **CARROY et al.** Chemistry and Technology of UV and EB Formulation for Coatings, Inks and Paints. SITA, 1994
- Chemistry and Technology of UV and EB formulation for Coatings, Inks and Paints. SITA, 1991, vol. 1